# EUROPEAN PATENT APPLICATION

(11) **EP 4 679 347 A1**
(43) Date of publication of application: **14.01.2026**
(21) Application number: 24770324.2
(22) Date of filing: 09.02.2024
(51) Int. Cl.: G06Q 30/015, G06F 3/01, G06F 3/0481, G06F 16/583, G06Q 30/06

(54) **INFORMATION PROCESSING DEVICE AND ARTICLE SEARCH METHOD**

(30) Priority: 10.03.2023 JP 2023037622
(71) Applicant: Panasonic Intellectual Property Management Co., Ltd., Kadoma-shi, Osaka 571-0057 (JP)
(72) Inventor: MARUYAMA, Atsushi, Osaka 571-0057 (JP); NAWAI, Hidehiko, Osaka 571-0057 (JP); IKEDA, Yuichi, Osaka 571-0057 (JP); NAGAI, Takayuki, Osaka 571-0057 (JP); KATO, Keita, Osaka 571-0057 (JP); NAKAMURA, Youichi, Osaka 571-0057 (JP)
(74) Representative: Eisenführ Speiser
(86) International application number: PCT/JP2024/004454
(87) International publication number: WO 2024/190206

(57) **Abstract**

An information processing device comprising: a reception unit that receives first image data, which is an image obtained by a camera capturing a range including a plurality of articles, and a keyword; a control unit that identifies an article matching the keyword from among the articles included in the first image data; and an output unit that outputs second image data in which the identified article from among the articles included in the image captured by the camera is displayed so as to be differentiated from the other articles.

## Description

### Technical Field

The present disclosure relates to an information processing apparatus and an article search method.

### Background Art

Various services using a camera of a terminal, such as a smartphone have been proposed. For example, an information processing system has been proposed in which a price or product information of each product can be viewed by a customer using a mobile terminal without providing a price tag to a product shelf (see, for example, Patent Literature (hereinafter, referred to as "PTL") 1).

### Citation List

### Patent Literature

PTL 1
Japanese Patent Application Laid-Open No. 2022-12266

### Summary of Invention

Various products are displayed on a product shelf. It may be difficult to find a product desired by a user from the various products.

A non-limiting exemplary embodiment of the present disclosure facilitates providing an information processing apparatus and a product search method that can easily find a product desired by a user from a group of displayed products.

An information processing apparatus according to one exemplary embodiment of the present disclosure includes: a receiver that receives first image data and a keyword, the first image data being an image resulting from capturing a range including a plurality of articles by a camera; a, in a range including a plurality of articles; a controller that specifies an article that matches the keyword from among the plurality of articles included in the first image data; and an output that outputs second image data for displaying the specified article in a distinguished manner from another article among the plurality of articles included in the image captured by the camera.

An article search method according to one exemplary embodiment of the present disclosure includes: receiving first image data and a keyword, the image being captured by a camera, in a range including a plurality of articles; specifying an article that matches the keyword from among the plurality of articles included in the first image data; and outputting second image data for displaying the specified article in a distinguished manner from another article among the plurality of articles included in the image captured by the camera.

It should be noted that general or specific embodiments may be implemented as a system, a method, an integrated circuit, a computer program, a storage medium, or any selective combination thereof.

According to an embodiment of the present disclosure, a product desired by a user can be easily found from a group of displayed products.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating a configuration example of a product search system according to Embodiment 1;
FIG. 2 is a diagram for describing screen examples of a terminal;
FIG. 3 is a diagram for describing a screen example of the terminal;
FIG. 4 is a diagram for describing another screen example of the terminal;
FIG. 5 is a diagram illustrating a block configuration example of a server;
FIG. 6 is a diagram illustrating a block configuration example of the terminal;
FIG. 7 is a diagram illustrating a data configuration example of product information stored in a storage unit of the server;
FIG. 8 is a flowchart illustrating an operation example of the server;
FIG. 9 is a flowchart illustrating an operation example of the terminal;
FIG. 10 is a diagram for describing a screen example of the terminal;
FIG. 11 is a diagram for describing another screen example of the terminal;
FIG. 12 is a diagram for describing another screen example of the terminal;
FIG. 13 is a diagram for describing another screen example of the terminal;
FIG. 14 is a diagram for describing another screen example of the terminal;
FIG. 15 is a diagram illustrating a screen example of a terminal according to Embodiment 2;
FIG. 16 is a diagram illustrating a screen example of a terminal according to Embodiment 2;
FIG. 17 is a diagram illustrating another screen example of the terminal according to Embodiment 2;
FIG. 18 is a diagram illustrating another screen example of the terminal according to Embodiment 2;
FIG. 19 is a diagram illustrating a data configuration example of word information stored in a storage unit of a server;
FIG. 20 is a flowchart illustrating an operation example of the server;
FIG. 21 is a diagram illustrating a data configuration example of product information stored in a storage unit of a server according to Embodiment 3; and
FIG. 22 is a diagram illustrating a screen example of a terminal.

### Description of Embodiments

Hereinafter, embodiments of the present disclosure will be described in detail with reference to the accompanying drawings as appropriate. However, a detailed description more than necessary may be omitted, such as a detailed description of an already well-known matter and a duplicated description for a substantially identical configuration, to avoid the following description becoming unnecessarily redundant and to facilitate understanding by those skilled in the art.

Note that, the accompanying drawings and the following description are provided for those skilled in the art to sufficiently understand the present disclosure and are not intended to limit the subject matter described in the claims.

### [Embodiment 1]

### <System Configuration Example>

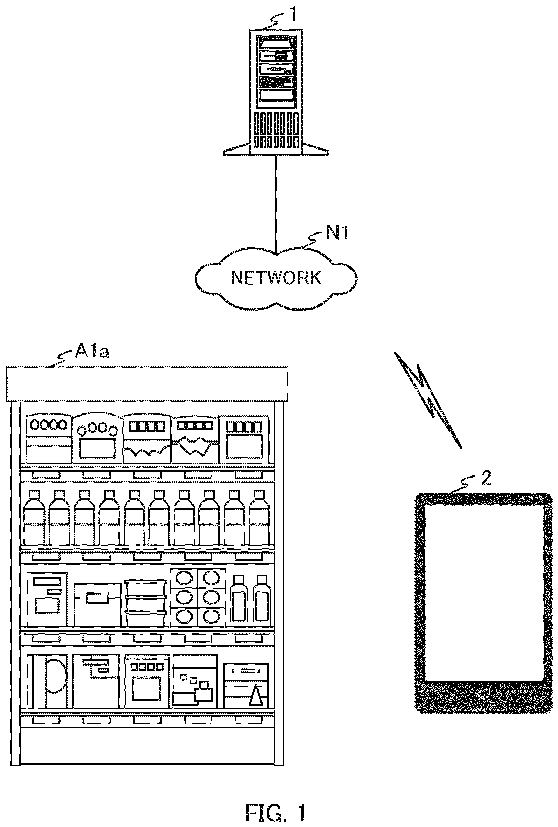

FIG. 1 is a diagram illustrating a configuration example of a product search system according to Embodiment 1. As illustrated in FIG. 1, the product search system includes server 1 and terminal 2. FIG. 1 illustrates network N1 and product shelf A1a placed in a store, in addition to the product search system.

Network N1 is composed of, for example, a radio network, such as a mobile phone network and the Internet. Server 1 and terminal 2 are connected to each other via network N1.

Server 1 stores product information of products displayed on product shelf A1a. For example, server 1 stores, in a storage unit, the product information, such as image data, a name, a category, ingredients, and a search target word provided by a manufacturer of the product. The search target word provided by the manufacturer to the product may be, for example, a word indicating a target user of the product, such as "for children" or "for adults," or may be a word indicating a content amount of the product, such as "one serving" or "two servings."

Terminal 2 is, for example, a terminal provided with a camera, such as a smartphone or a tablet terminal. Terminal 2 is, for example, a terminal of a customer (hereinafter, may be referred to as a user) who purchases the product displayed on product shelf A1a. An application (program) for executing a product search service provided by the product search system is implemented in terminal 2.

Note that, server 1 may be referred to as a product search apparatus or an information processing apparatus.

### <Screen Example>

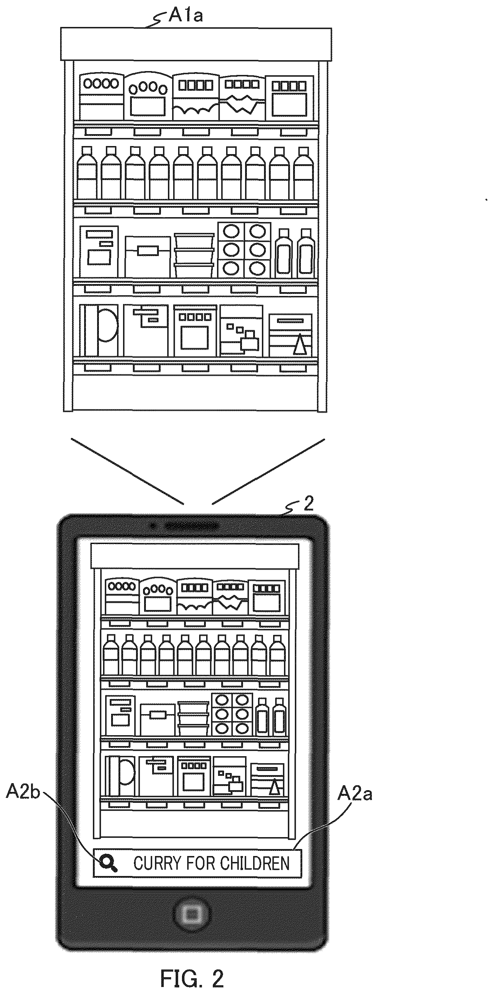

FIG. 2 is a diagram for describing a screen example of terminal 2. In FIG. 2, the same components as those in FIG. 1 are designated by the same reference numerals.

The user starts the application for executing the product search service on terminal 2. Terminal 2 (application) activates a camera and displays an image captured by the camera on a display. In the example of FIG. 2, terminal 2 displays an image of product shelf A1a on the display.

The image of the camera displayed on the display changes in real time according to an imaging direction of the camera. That is, a moving image of the camera is displayed on the display of terminal 2.

As illustrated in FIG. 2, terminal 2 displays text box A2a for searching for the product on the display. The user inputs a keyword of a product desired to be searched for, into text box A2a. In the example of FIG. 2, the keywords "curry" and "for children" are input to text box A2a as the keywords to be searched for by the user of terminal 2.

Terminal 2 displays search start button A2b for starting the search for the product on the display of terminal 2 (for example, in text box A2a). When search start button A2b is pressed (tapped), terminal 2 transmits, to server 1, an image (still image) captured by the camera when search start button A2b is tapped. In the example of FIG. 2, the image of product shelf A1a is transmitted to server 1.

Further, when search start button A2b is tapped, terminal 2 transmits, to server 1, the keyword input to text box A2a. In the example of FIG. 2, the keywords "curry" and "for children" are transmitted to server 1.

Server 1 receives the image of product shelf A1a transmitted from terminal 2 and the keyword input by the user.

Server 1 specifies (acquires) a product that matches the keyword received from terminal 2 with reference to the product information stored in the storage unit, based on the image data of product shelf A1a received from terminal 2 and the keyword received from terminal 2. The processing of specifying the product that matches the keyword can be achieved by searching for the received keyword from a character string included in the product information using a general search engine, so that the details thereof will be omitted herein. Wheen the product that matches the keyword is specified from the image data of product shelf A1a, server 1 generates image data for guiding the specified product. Hereinafter, the image for guiding the product that matches the keyword may be referred to as a guide image. Further, the image data of the guide image may be referred to as guide image data.

Server 1 transmits the guide image data generated from the guide image to terminal 2. Further, server 1 transmits, to terminal 2, in association with the guide image data, the product information of the product (product that matches the keyword) for which the guide image is generated.

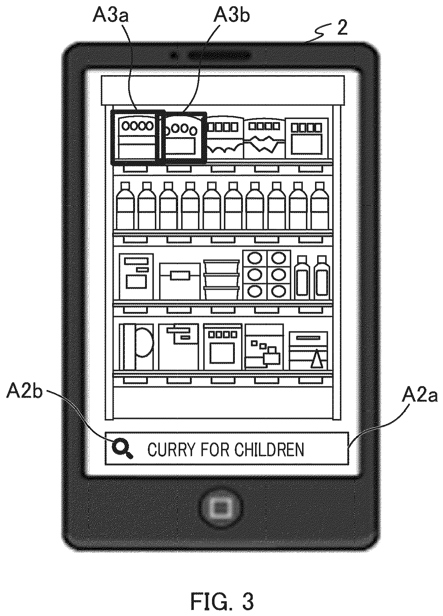

FIG. 3 is a diagram for describing a screen example of terminal 2. In FIG. 3, the same components as those in FIG. 2 are designated by the same reference numerals.

Terminal 2 displays guide images A3a and A3b based on the guide image data received from server 1, in a superimposed manner on the image of product shelf A1a displayed on the display. The image of product shelf A1a on which guide images A3a and A3b are displayed in a superimposed manner may be a still image when search start button A2b is tapped.

Guide images A3a and A3b are images for guiding the product that matches the keyword input by the user to text box A2a. For the keywords "curry" and "for children" described in FIG. 2, guide images A3a and A3b guide a product of "curry for children." Guide images A3a and A3b each have a shape surrounding the product, for example, and may have a rectangular frame shape.

In a case where the product that matches the keyword received from terminal 2 is not included in the image of product shelf A1a received from terminal 2, server 1 may transmit, to terminal 2, for example, image data such as "the product you are looking for is not included in the captured image." Terminal 2 displays an image indicating that the product that matches the keyword is not included in product shelf A1a on the display based on the image data received from server 1.

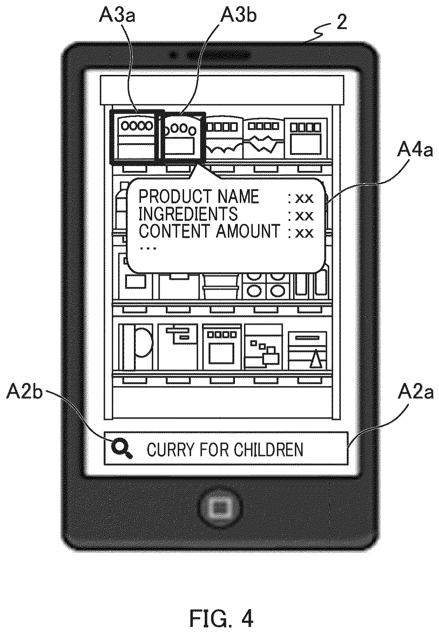

FIG. 4 is a diagram for describing a screen example of terminal 2. In FIG. 4, the same components as those in FIG. 3 are designated by the same reference numerals.

As described in FIG. 2, server 1 transmits the guide image data to terminal 2 in association with the product information of the product indicated by the guide image. For example, the guide image data of guide image A3a is associated with the product information, such as a product name, ingredients, and a content amount of the product indicated by guide image A3a. The guide image data of guide image A3b is associated with the product information, such as a product name, ingredients, and a content amount of the product indicated by guide image A3b.

When the guide image or the product guided by the guide image is tapped by the user, terminal 2 displays the guide image that has been tapped or the product information of the product that is guided by the guide image on the display. For example, when guide image A3b is tapped, terminal 2 displays the product information of the product guided by guide image A3b as illustrated in an image A4a of FIG. 4.

In the above description, the search example of the food product, such as curry, has been described, but the genre of the product to be searched for by server 1 is not limited to food. Server 1 may search for a product such as an electrical appliance.

### <Block Configuration Example>

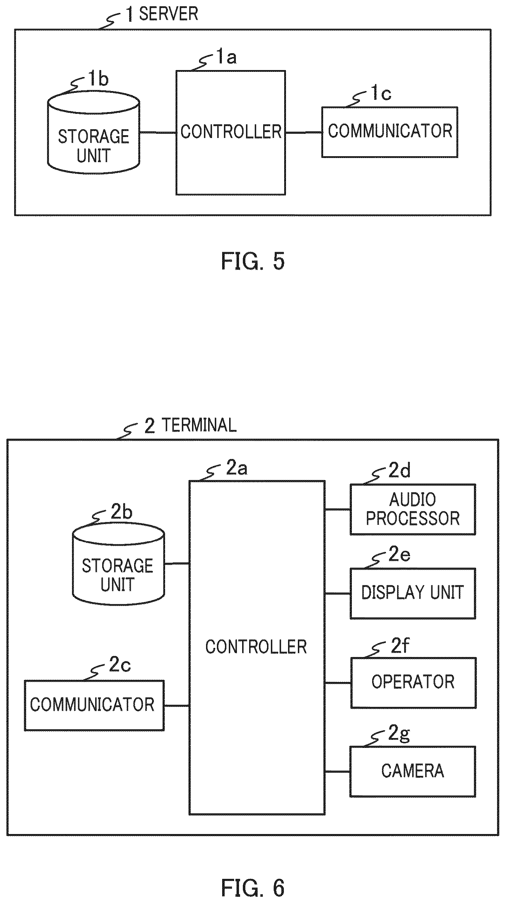

FIG. 5 is a diagram illustrating a block configuration example of server 1. As illustrated in FIG. 5, server 1 includes controller 1a, storage unit 1b, and communicator 1c.

Controller 1a controls the entirety of server 1. Controller 1a may be configured of, for example, a central processing unit (CPU).

Storage unit 1b stores therein a program for operating controller 1a. Further, storage unit 1b stores therein data for controller 1a to perform calculation processing and/or data for controlling each connected unit. Storage unit 1b may be configured of a storage device, such as a random access memory (RAM), a read only memory (ROM), a flash memory, and a hard disk drive (HDD).

Communicator 1c is connected to network N1 and communicates with a device connected to network N1.

FIG. 6 is a diagram illustrating a block configuration example of terminal 2. As illustrated in FIG. 6, terminal 2 includes controller 2a, storage unit 2b, communicator 2c, audio processor 2d, display unit 2e, operator 2f, and camera 2g.

Controller 2a controls the entirety of terminal 2. Controller 2a may be configured of, for example, a CPU.

Storage unit 2b stores therein a program for operating controller 2a. Further, storage unit 2b stores therein data for controller 2a to perform calculation processing and/or data for controlling each connected unit. Storage unit 2b may be configured of a storage device such as a RAM, a ROM, a flash memory, and an HDD.

Communicator 2c is connected to network N1 and communicates with a device connected to network N1.

Audio processor 2d converts analog audio data output from a microphone (not illustrated) built in terminal 2 into digital audio data and outputs the digital audio data to controller 2a. Further, audio processor 2d converts the digital audio data output from controller 2a into analog audio data and outputs the analog audio data to a speaker (not illustrated) built in terminal 2.

Display unit 2e displays a video on the display based on digital video data output from controller 2a. The display is, for example, a liquid crystal display.

Operator 2f accepts an operation of the user of terminal 2. Operator 2f outputs information (signal) corresponding to the accepted operation to controller 2a. Operator 2f is, for example, a touch screen that is superimposed on the display. Operator 2f may be a push-button.

Camera 2g performs capturing in accordance with the control of controller 2a. Camera 2g outputs the captured image data to controller 2a.

### <Data Configuration Example>

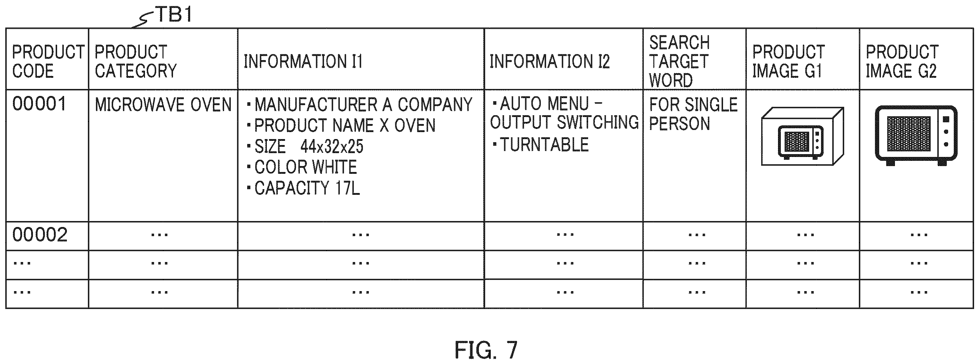

FIG. 7 is a diagram illustrating a data configuration example of product information TB1 stored in storage unit 1b of server 1. In FIG. 7, a data configuration example of product information TB1 will be described using an electrical appliance as an example.

Product information TB1 includes a product code, a product category, information I1, information I2, a search target word, product image G1, and product image G2.

The product code is a code for identifying a product.

The product category indicates a category of the product. In the example of FIG. 7, the product category of a product code "00001" is "microwave oven."

Information I1 is information related to specifications, such as a manufacturer, a product name, a size, a color, and a capacity of the product. Information I2 is information related to functions of the product. Information I1 and I2 may be stored in product information TB1 as one information without distinction.

The search target word is a word that is provided by the manufacturer of the product and that is not included in information I1 and I2. For example, the manufacturer provides, as the search target word, a word with which the manufacturer wants server 1 to search for (specify) the product of the manufacturer in response to a keyword input by the user to terminal 2.

For example, in a case where the manufacturer of the product of the product code "00001" wants the product of the product code "00001" be searched for with the keyword "for single person" by the server 1, the manufacturer of the product of the product code "00001" provides the search target word "for single person" to the product of the product code "00001." The search target word may be referred to as a hashtag.

Product image G1 is image data of the product in a packaged state in a box, a bag, or the like. In FIG. 7, as an example of the package, image data when the product is stored in a cardboard box is illustrated. Product image G2 is image data of the product itself. The image data may not be one, and for example, image data captured from various directions may be stored as product images G1 and G2.

Server 1 specifies the product displayed on the product shelf, based on the image data of the product shelf received from terminal 2 and the image data stored in product information TB1. The product may be displayed on the product shelf in a packaged state or may be displayed in its original state. Therefore, product information TB1 stores product image G1 of the product in a packaged state and product image G2 of the product in its original state.

Note that, product information TB1 need not be stored in storage unit 1b of server 1. Product information TB1 may be stored in, for example, another server such as a storage server connected to network N1.

### <Operation Example>

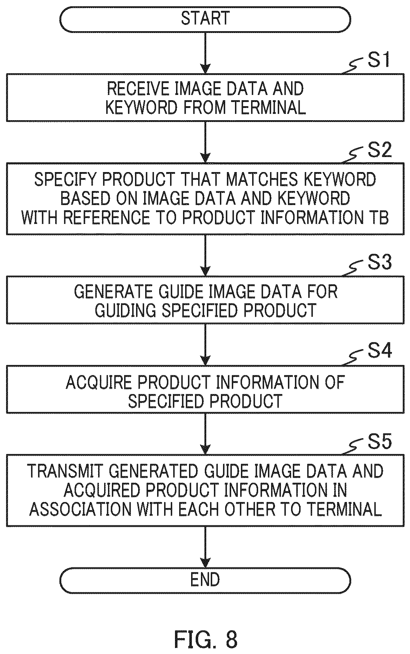

FIG. 8 is a flowchart illustrating an operation example of server 1. Server 1 receives the image data of product shelf A1a captured by camera 2g and the keyword input by the user from terminal 2 (S1).

Server 1 specifies the product that matches the keyword from the products in the image of the image data, based on the image data received in S1 and the keyword with reference to product information TB1 (S2).

For example, server 1 specifies (extracts) the product included in the image of product shelf A1a received in S1 in comparison of the image data of product shelf A1a received in S1 with the image data (for example, the image data of product images G1 and G2 illustrated in FIG. 7) included in product information TB1. Then, server 1 compares the product information of the product specified by the image with the keyword received in S1 to specify the product that matches the keyword received in S1.

Server 1 generates the guide image data for guiding the product specified in S2 (S3). For example, server 1 generates guide image data for displaying guide images A3a and A3b illustrated in FIG. 3 on the display of terminal 2.

Server 1 acquires the product information of the product specified in S2 with reference to product information TB1 (S4).

Server 1 transmits the guide image data generated in S3 and the product information acquired in S4 in association with each other to terminal 2 (S5).

Note that, in the flowchart of FIG. 8, the order of the processes of S3 and S4 may be switched.

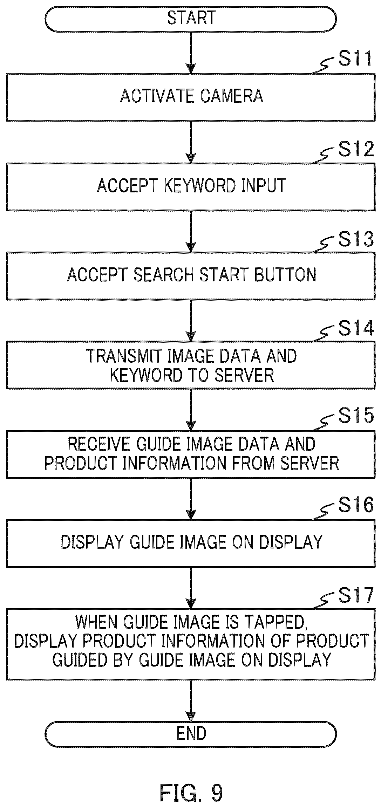

FIG. 9 is a flowchart illustrating an operation example of terminal 2. For example, when the application for the product search service is started in response to an operation of the user, terminal 2 executes the processing illustrated in FIG. 9.

Terminal 2 activates camera 2g (S11).

Terminal 2 accepts the keyword input from the user (S12).

Terminal 2 accepts the tap of the search start button from the user (S13).

When the tap of the search start button is accepted in S13, terminal 2 transmits the image (still image) captured by camera 2g and the keyword accepted from the user in S12 to server 1 (S14).

Terminal 2 receives, from server 1, the guide image data and the product information of the product guided by the guide image based on the guide image data (S15). The guide image data and the product information are associated with each other (see S5 in FIG. 8).

Terminal 2 displays the guide image on the display based on the guide image data received in S15 (S16).

When the guide image is tapped, terminal 2 displays the product information of the product guided by the tapped guide image on the display (S17). For example, terminal 2 displays the product information associated with the guide data on the display.

### <Summary of Embodiment 1>

As described above, communicator 1c of server 1 receives the image data of the image displayed on the display and the keyword input to terminal 2, from terminal 2 that displays the image captured by camera 2g on the display. Controller 1a specifies the product that matches the keyword from among the products included in the received image data. Controller 1a generates the guide image data presenting the specified product among the products included in the image displayed on the display, and transmits the guide image data to terminal 2.

As a result, on the display of terminal 2 that displays product shelf A1a captured by the user, the product searched for by the keyword search of the user is presented by the guide image of the guide image data. Therefore, the user can easily find the product desired by the user from the group of displayed products.

### <Variations>

### · Variation 1

In the above description, server 1 transmits, to terminal 2, the generated guide image data and the product information acquired from product information TB1 in association with each other. However, the guide image data and the product information do not necessarily have to be transmitted to terminal 2 at the same time. For example, the product information is not essential for displaying the guide image data, so that server 1 may be configured to transmit the product information to terminal 2 in response to a request from terminal 2.

In this case, for example, server 1 may include (provide) identification information for identifying the guide image in the guide image data transmitted to terminal 2. Terminal 2 may transmit the identification information provided to the guide image to server 1 to request the transmission of the product information, and server 1 may transmit the product information corresponding to the received identification information to terminal 2 when receiving the identification information provided to the guide image from terminal 2. Terminal 2 may display the product information received from server 1 on the display.

### · Variation 2

In the above description, the product that has been searched for is guided by the guide image, but the present disclosure is not limited thereto.

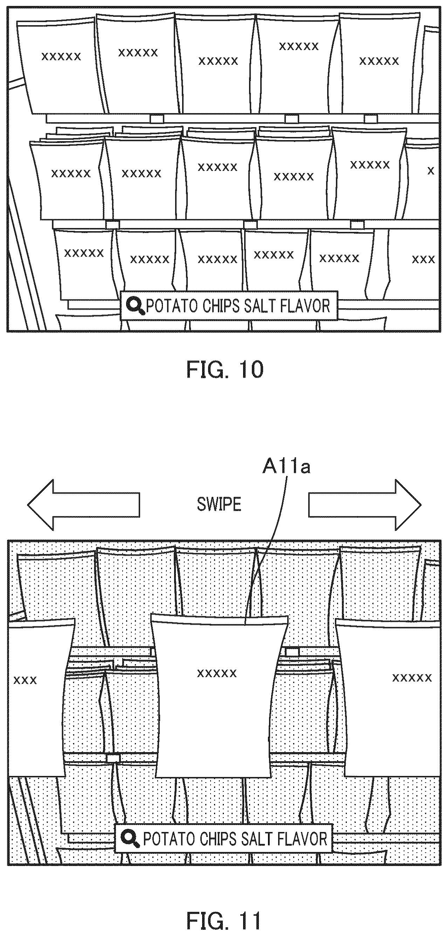

FIG. 10 is a diagram for describing a screen example of terminal 2. FIG. 10 illustrates a screen example of terminal 2 before the keyword search. In FIG. 10, an edge portion of the display of terminal 2 is omitted (hereinafter, the same applies to FIGS. 11 to 14). The display of terminal 2 displays, for example, product shelf A1a on which a snack, such as potato chips is placed.

FIG. 11 is a diagram illustrating a screen example of terminal 2. FIG. 11 illustrates a screen example of terminal 2 after the keyword search.

On the display of terminal 2, the image of the product that has been searched for by server 1 is displayed in a superimposed manner on the image of product shelf A1a. The image of the product (product that has been searched for by server 1) displayed in a superimposed manner on the image of product shelf A1a may be the product image stored in product information TB1.

In a case where a plurality of products is searched for and the plurality of products that has been searched for cannot be displayed on the display at once, terminal 2 displays some of the plurality of products that has been searched for, as illustrated in FIG. 11. Terminal 2 displays another product that does not fit on the display, for example, in response to a swipe operation.

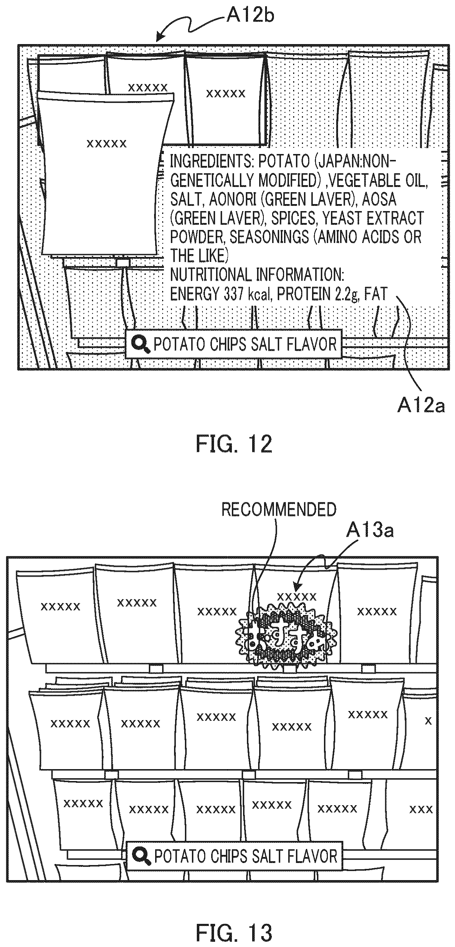

FIG. 12 is a diagram for describing a screen example of terminal 2. When the image of the product of the search result is tapped, terminal 2 displays detailed information of the product. For example, when product image A11a illustrated in FIG. 11 is tapped, terminal 2 displays the product information of the tapped product as illustrated in an image A12a of FIG. 12.

Further, as indicated by arrow A12b in FIG. 12, terminal 2 highlights and displays the tapped product on product shelf A1a of the background image. Specifically, in FIG. 12, as a specific example of the highlight display, the tapped products are entirely surrounded by a frame, but the display may be performed in which the tapped product is individually surrounded by a frame. The highlight display method is not limited to how display is performed with the frame. The highlight display may be any display as long as it assists the user in recognizing where the tapped product is on product shelf A1a. For example, possibilities include displaying the tapped product brighter than other products, displaying a special image such as an arrow or a balloon for the tapped product and/or the like.

As described above, server 1 controls terminal 2 such that one or some of the plurality of product images presenting the search result are displayed on the display of terminal 2. Server 1 controls terminal 2 such that one or some of the product images are replaced and displayed on the display of terminal 2 in response to the operation of terminal 2. In a case where one of the some of the product images is selected on terminal 2, server 1 performs control such that a highlight image presenting the selected product is displayed on the display of terminal 2. As a result, the user can easily recognize where the product found by the keyword search is placed on product shelf A1a with a simple operation.

Note that, in the above description, terminal 2 highlights and displays the tapped product, but the present disclosure is not limited thereto. Terminal 2 may guide the tapped product with, for example, a quadrangular frame-shaped guide image.

### · Variation 3

Terminal 2 may highlight and display the product found by the keyword search instead of the frame-shaped guide image described in FIG. 3 and the like. The highlighted and displayed product can be understood as guiding the product found by the keyword search. Therefore, the image of the highlight display can be understood as the guide image. Further, the highlight display in an aspect different from the display with the frame may be performed in FIG. 3 and the like.

### · Variation 4

Server 1 may display advertising information, such as a recommended product, which is a product recommended to the user, on the display of terminal 2.

FIG. 13 is a diagram for describing a screen example of terminal 2. When a recommended product is included in product shelf A1a imaged by camera 2g of terminal 2, server 1 displays an image indicating that the product is the recommended product on the display of terminal 2 as indicated by arrow A13a in FIG. 13.

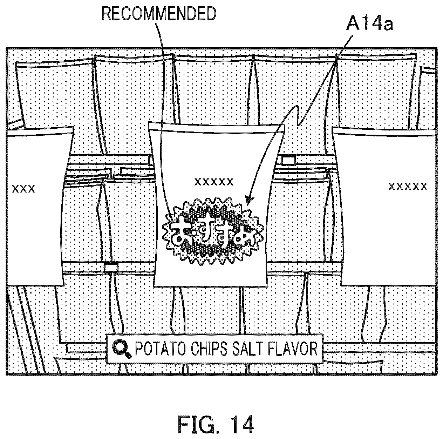

FIG. 14 is a diagram for describing a screen example of terminal 2. When a recommended product is included in the product of the keyword search result, server 1 displays image 14a indicating that the product is the recommended product on the display of terminal 2 as indicated by arrow A14a in FIG. 14.

For example, when the user downloads the application for executing the product search service to terminal 2, the user registers user information with server 1. Server 1 determines a product to be advertised and an advertising content based on the registered user information. For example, server 1 determines the product to be advertised and the advertising content based on the user information, such as age and gender of the user.

Further, a past search history of the user of terminal 1 may be included in the user information, and server 1 may be configured to select a recommended product in consideration of the search history. Further, an OK word or a negative word may be included in the user information. In this case, server 1 may perform control such that a product that matches the OK word is preferentially selected as a recommended product and a product that matches the negative word is excluded from recommended products.

Note that server 1 can acquire the user information by using, for example, a user ID input by the user when the user logs in to server 1 (product search service). Server 1 determines the product to be advertised and the advertising content as described above based on the acquired user information.

### · Variation 5

Terminal 2 may have functions of server 1. For example, terminal 2 may specify the product that matches the keyword from the products of the image of the image data based on the image data of the image captured by camera 2g and the input keyword with reference to product information TB1. Terminal 2 may generate the guide image data for guiding the specified product. In this case, server 1 is not necessary. Terminal 2 may be referred to as a product search apparatus or an information processing apparatus.

### [Embodiment 2]

In Embodiment 2, the server receives in advance a word for excluding a specific product from the search result from the user via the terminal of the user. For example, the server receives in advance words such as wheat, soybean, and egg. As a result, for example, when the user searches for a certain snack with a keyword using the terminal, a snack containing an allergen, such as wheat, soybean, and egg is excluded from the search result of the server.

Further, in Embodiment 2, the server receives in advance a word for searching for a specific product from the user via the terminal of the user. For example, the server receives words such as a shoe size of "X cm" and a clothing size of "M size." As a result, for example, when the user searches for a certain shoe with a keyword using the terminal, the server searches for the shoe of the size registered in advance by the user.

Hereinafter, a word indicating the product information of the product that is avoided by the user may be referred to as a negative word. Further, a word indicating the product information of the product desired by the user may be referred to as an OK word. In a case where the negative word and the OK word are not distinguished from each other, the negative word and the OK word may be referred to as a registered word.

Hereinafter, a difference from Embodiment 1 will be described. The system configuration, the block configuration of the server, and the block configuration of the terminal in Embodiment 2 are the same as those in FIGS. 1, 5, and 6 described in Embodiment 1.

### <Screen Examples>

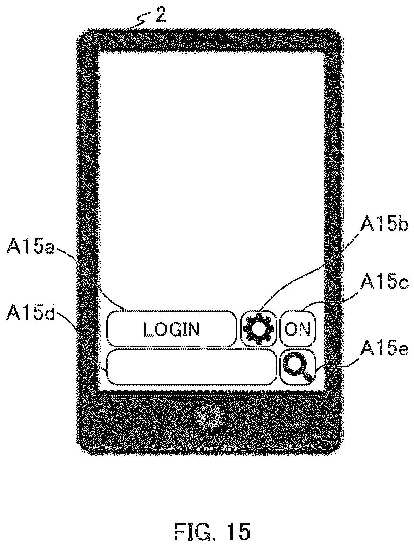

FIG. 15 is a diagram illustrating a screen example of terminal 2 according to Embodiment 2. For example, when the application for the product search service is started in response to an operation of the user, terminal 2 displays a screen illustrated in FIG. 15 on the display.

As illustrated in FIG. 15, the following buttons are displayed on the display of terminal 2: login button A15a; setting button A15b; registered word enabling button A15c for enabling (turning on) a keyword search based on the registered word; text box A15d for accepting a search keyword; and search start button A15e for starting a search.

When login button A15a is tapped, terminal 2 displays text boxes for accepting a user name and a password on the display (not illustrated). Terminal 2 transmits the user name and the password input to the text box to server 1.

When the user name and the password transmitted from terminal 2 match the registered user name and password (for example, stored in storage unit 1b), server 1 permits a search for a product using text box A15d. Further, server 1 permits the acceptance of operations of setting button A15b and registered word enabling button A15c.

Note that, the authentication method, such as OpenID (registered trademark) may be used for login (authentication process).

When setting button A15b is tapped after the login, terminal 2 displays text boxes for accepting registered words.

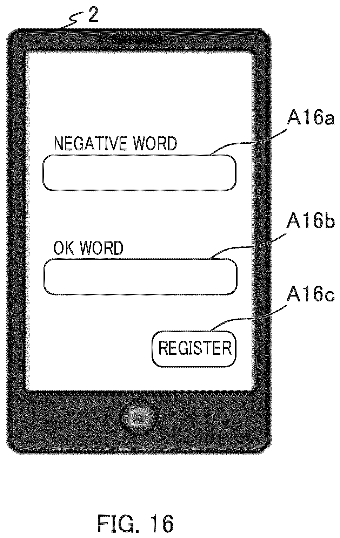

FIG. 16 is a diagram illustrating a screen example of terminal 2 according to Embodiment 2. When setting button A15b illustrated in FIG. 15 is tapped after the login, as illustrated in FIG. 16, text box A16a for accepting the negative word and text box A16b for accepting the OK word are displayed on the display of terminal 2. Further, registration button A16c for registering the registered words input to the text boxes A16a and A16b in server 1 is displayed on the display of terminal 2.

The user inputs the negative word in text box A16a. The user can input a plurality of negative words with, for example, a blank (space) therebetween. The user inputs, for example, negative words, such as wheat, soybean, and egg.

The user inputs the OK word in text box A16b. The user can input a plurality of OK words with, for example, a blank therebetween. The user inputs, for example, OK words, such as halal, vegan, gluten-free, shoe size, and clothing size.

The user can register both or one of the negative words and the OK words with server 1.

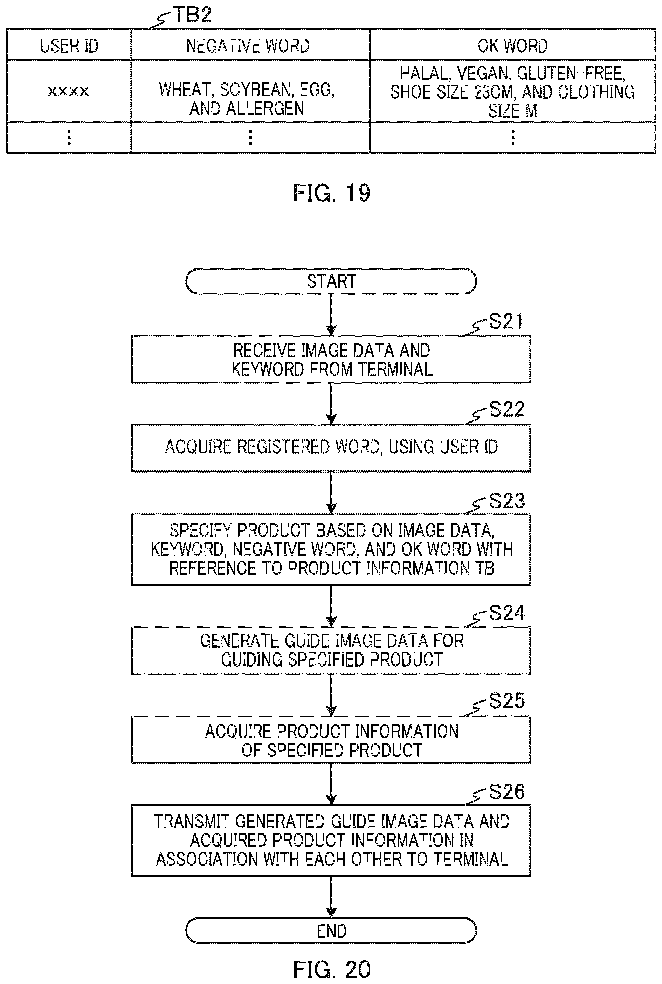

When registration button A16c is tapped, terminal 2 transmits the negative word input to text box A16a and the OK word input to text box A16b to server 1. Server 1 stores the negative word and the OK word transmitted from terminal 2 in storage unit 1b in association with identification information (user ID) for identifying the user (see FIG. 19 described below).

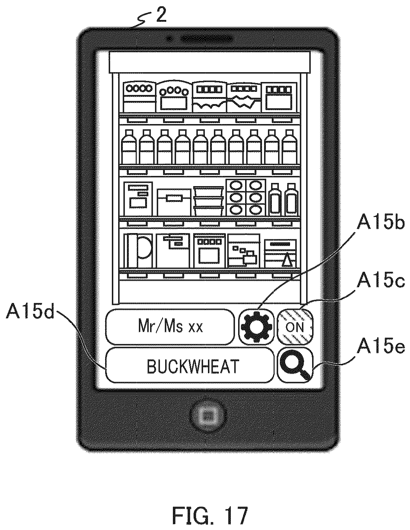

FIG. 17 is a diagram illustrating a screen example of terminal 2 according to Embodiment 2. In FIG. 17, the same components as those in FIG. 15 are designated by the same reference numerals.

When login button A15a illustrated in FIG. 15 is tapped and login is made to the system of the product search service, the screen illustrated in FIG. 17 is displayed on the display of terminal 2. As illustrated in FIG. 17, the image of product shelf A1a captured by camera 2g and the logged-in user name are displayed on the display of terminal 2. In FIG. 17, it is assumed that registered word enabling button A15c is tapped and the keyword search based on the registered words is turned on.

When registered word enabling button A15c is tapped in a state in which the keyword search based on the registered words is turned on, the keyword search based on the registered word is turned off. When registered word enabling button A15c is tapped in a state in which the keyword search based on the registered word is turned off, the keyword search based on the registered word is turned on.

The user inputs a keyword for a product desired to be searched for, into text box A15d. In the example of FIG. 17, the keyword "buckwheat" is input to text box A15d as the keyword to be searched for by the user of terminal 2.

When search start button A15e is tapped, terminal 2 transmits the image (still image) captured by camera 2g when search start button A15e is tapped, to server 1. Further, when search start button A15e is tapped, terminal 2 transmits the keyword input to text box A15d to server 1.

Server 1 acquires a negative word and an OK word for the user with reference to storage unit 1b based on the user name (user ID) received from terminal 2 at the time of login. Server 1 specifies the product that matches the keyword transmitted from terminal 2 and the acquired OK word and does not match the negative word, from the image of the image data transmitted from terminal 2. Specifically, the search is performed for each of the OK word and the negative word, and the product that is included in the search result with the OK word but not included in the search result with the negative word is specified. Server 1 generates guide data for guiding the specified product as in Embodiment 1.

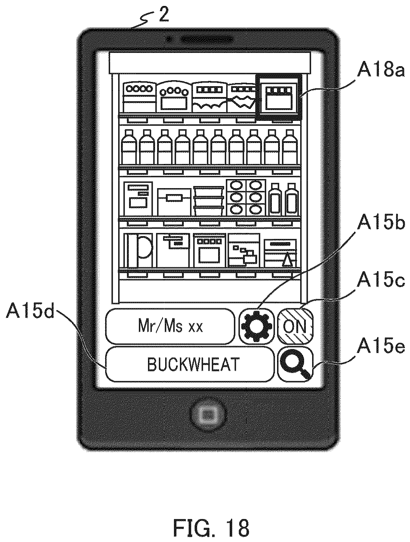

FIG. 18 is a diagram illustrating a screen example of terminal 2 according to Embodiment 2. In FIG. 18, the same components as those in FIG. 17 are designated by the same reference numerals.

Terminal 2 displays guide image A18a based on the guide image data received from server 1, in a superimposed manner on the image of product shelf A1a displayed on the display. Guide image A18a is an image for guiding a product that matches the keyword input by the user to text box A15d and the registered word registered to server 1 by the user.

For example, in a case with the example of the negative words "wheat, soybean, and egg" described in FIG. 16 and the example of the keyword "buckwheat" described in FIG. 17, guide image A18a guides "buckwheat" that contains no "wheat, soybean, and egg".

When the keyword search based on the registered words is turned off by the operation of registered word enabling button A15c, server 1 does not perform the keyword search based on the registered words. In this case, for example, when the keyword "buckwheat" is input, server 1 may search for buckwheat containing "wheat, soybean, and egg".

Further, when guide image A18a is tapped, terminal 2 displays the information of the product guided by guide image A18a on the display as in Embodiment 1.

Further, the login of the user may not be performed in the above description. The user may set a registered word and perform a product search with a keyword without logging in.

### <Data Configuration Example>

FIG. 19 is a diagram illustrating a data configuration example of word information TB2 stored in storage unit 1b of server 1.

Word information TB2 includes a user ID, negative words and OK words. The user ID is identification information of the user who has registered the negative word and the OK word. The negative word is a negative word registered by the user. The OK word is an OK word registered by the user.

### <Operation Example>

FIG. 20 is a flowchart illustrating an operation example of server 1. Hereinafter, it is assumed that the user of terminal 2 has logged in to server 1, and server 1 has received (acquired) the user ID of the user of terminal 2. Further, it is assumed that registered word enabling button A15c of terminal 2 has been tapped and the keyword search based on the registered word has been turned on. Further, it is assumed that the registered words of the user of terminal 2 have been registered to server 1 (storage unit 1b).

Server 1 receives the image data of product shelf A1a captured by camera 2g and the keyword input by the user from terminal 2 (S21).

Server 1 acquires the registered words corresponding to the user ID of the user of terminal 2 with reference to word information TB2 based on the user ID input when the user of terminal 2 logs in (S22).

Server 1 specifies the product that matches the keyword and the OK words and does not match the negative words, with reference to product information TB1, based on the image data and the keyword received in S21 and the registered words (OK words and negative words) acquired in S22 (S23).

For example, server 1 specifies the product included in the image of product shelf A1a received in S21 in comparison of the image data of product shelf A1a received in S21 with the image data (for example, the image data of product images G1 and G2 illustrated in FIG. 7) included in product information TB1. Then, server 1 compares the product information of the product specified by the image with the keyword received in S21 and the registered words acquired in S22 to specify the product that matches the keyword and the OK words and does not match the negative words.

Server 1 generates guide image data for guiding the product specified in S23 (S24). For example, server 1 generates guide image data for displaying guide image A18a illustrated in FIG. 18 on the display of terminal 2.

Server 1 acquires the product information of the product specified in S23, with reference to product information TB1 (S25).

Server 1 transmits, to terminal 2, the guide image data generated in S24 and the product information acquired in S25 in association with each other (S26).

In the flowchart of FIG. 20, the order of the processes of S24 and S25 may be switched.

The operation of the keyword search of terminal 2 is the same as the operation of the flowchart illustrated in FIG. 9. For example, terminal 2 starts the application for the product search service in response to the operation of the user, and after the login, executes the processing of the flowchart illustrated in FIG. 9.

Note that, even when no registered word of the user of terminal 2 is registered to server 1, the operation of the keyword search of terminal 2 is the same as the operation of the flowchart illustrated in FIG. 9. Further, even when the search based on a registered word is turned on or off, the operation of the keyword search of terminal 2 is the same as the operation of the flowchart illustrated in FIG. 9.

### <Summary of Embodiment 2>

As described above, server 1 specifies a product that does not match a negative word registered in advance and matches a keyword. Further, server 1 specifies a product that matches an OK word registered in advance and the keyword. As a result, the user can easily find the product desired by the user.

### [Embodiment 3]

There may be a case where although a food product contains no allergen (for example, crab or shrimp) of the user in the ingredients, the product is manufactured using common equipment with another product that uses the allergen (for example, crab or shrimp) of the user as an ingredient, for example. In Embodiment 3, a product that is not directly related to the allergen of the user but is indirectly related to the allergen of the user is guided on a display of a terminal of the user in a keyword search.

Hereinafter, a difference from Embodiment 1 and Embodiment 2 will be described. The system configuration, the block configuration of the server, and the block configuration of the terminal in Embodiment 3 are the same as those in FIGS. 1, 5, and 6 described in Embodiment 1.

### <Data Configuration Example>

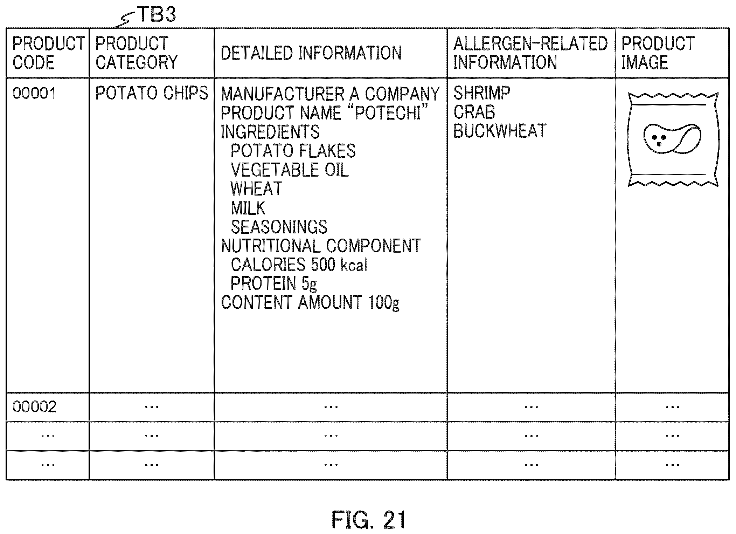

FIG. 21 is a diagram illustrating a data configuration example of product information TB3 stored in storage unit 1b of server 1 according to Embodiment 3.

Product information TB1 includes a product code, a product category, detailed information, allergen-related information, and a product image.

The product code is a code for identifying a product.

The product category indicates a category of the product. In the example of FIG. 21, the product category of a product code "00001" is "potato chips."

The detailed information is information such as a manufacturer, a product name, ingredients, nutritional component, and a content amount of the product. The detailed information can be regarded as information that is directly related to the product.

The allergen-related information is information on an allergen contained in another product in a case where manufacturing equipment for the product also manufactures said another product containing an allergen that is not included in the ingredients of the product.

For example, the product "potato chips" of the product code "00001" does not contain allergens such as shrimp, crab, and buckwheat as the ingredients, but is manufactured using common equipment with a product that uses shrimp, crab, and buckwheat as the ingredients.

The allergen-related information can be regarded as information indicating an allergen that is not directly contained in the product but is possibly contained in the product, the allergen being indicated by the allergen-related information. The allergen-related information may be included in the detailed information.

The product image is image data of the product itself. The image data may not be one, and for example, image data captured from various directions may be stored as the product image.

Product information TB3 may include, for example, image data of a plurality of products in a packaged state. Further, product information TB3 may store a search target word as in product information TB1 described in FIG. 7.

### <Screen Example>

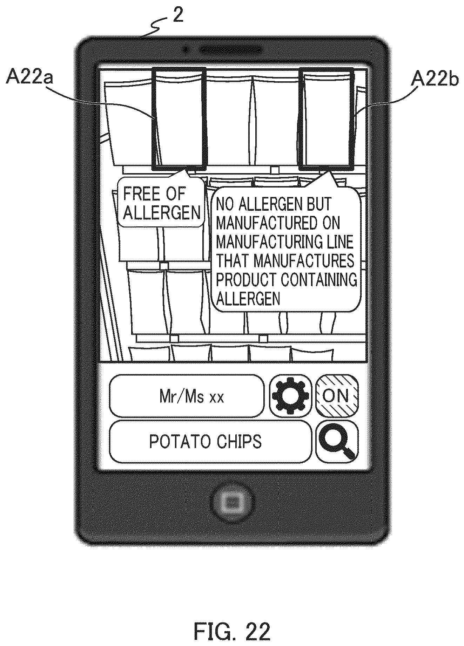

FIG. 22 is a diagram illustrating a screen example of terminal 2. FIG. 22 illustrates a screen example of a case where the user has logged in and then searched for the keyword "potato chips." Hereinafter, it is assumed that "shrimp" has been registered as a negative word.

Guide image A22a is a guide image for guiding a product that matches the keyword "potato chips" input by the user and does not match the negative word "shrimp" (for example, a product that includes "shrimp" neither in the detailed information nor the allergen-related information of product information T3).

Guide image A22b is a guide image for guiding a product that matches the keyword "potato chips" input by the user and matches the negative word "shrimp" in the allergen-related information.

That is, in Embodiment 3, the guide image for guiding the product that does not directly contain the allergen of the user (for example, does not contain the allergen in the ingredients) but possibly contains the allergen is displayed on the display of terminal 2.

When guide images A22a and A22b are tapped, terminal 2 displays information related to the allergen.

For example, the product guided by guide image A22a does not contain the allergen of the user of terminal 2 in the ingredients and is not manufactured using the equipment for manufacturing another product containing the allergen of the user of terminal 2. Therefore, when guide image A22a is tapped, terminal 2 displays, for example, a text image such as "free of allergen."

For example, the product guided by guide image A22b does not contain the allergen of the user of terminal 2 in the ingredients, but is manufactured using the equipment for manufacturing the product containing the allergen of the user of terminal 2. Therefore, in when guide image A22b is tapped, terminal 2 displays, for example, a text image such as "does not contain an allergen but manufactured on a manufacturing line that manufactures a product containing an allergen."

Note that, when guide images A22a and A22b are tapped, terminal 2 may display the information of the allergen and may also display the detailed information of the product as in Embodiment 1. For example, terminal 2 may display the information of the allergen of the product and the detailed information such as the ingredients of the product.

### <Operation Example>

The operation of server 1 is the same as the operation of the flowchart illustrated in FIG. 20. However, the processes of S23, S25, and S26 are different. Hereinafter, the processes of S23, S25, and S26 will be described.

### · Process of S23

Server 1 specifies, with reference to product information TB3, the product that matches the keyword and an OK word, and does not match a negative word in both the detailed information and the allergen-related information, based on the image data and the keyword received in S21 and the registered words (OK word and negative word) acquired in S22. Further, server 1 specifies the product for which the negative word does not match the detailed information but matches the allergen-related information.

### · Process of S25

When the product specified in S23 includes a product for which the negative word does not match the detailed information and the allergen-related information, server 1 generates information indicating that the specified product does not contain the allergen. For example, server 1 generates data of a text image such as "free of allergen."

Further, in a case where the product for which the negative word does not match the detailed information but matches the allergen-related information is specified in the product specified in S23, server 1 generates information indicating that the specified product possibly contains the allergen. For example, server 1 generates data of a text image such as "does not contain an allergen but manufactured on a manufacturing line that manufactures a product containing an allergen."

### · Process of S26

Server 1 transmits, to terminal 2, the guide image data generated in S24 and the information (text image data) generated in S25 in association with each other.

The operation of terminal 2 is the same as the operation described in <Operation Example> of Embodiment 2; thus, the description thereof will be omitted herein.

### <Summary of Embodiment 3>

As described above, server 1 specifies the product that does not match the negative word registered in advance, matches the keyword, and is manufactured using the common equipment with the product that matches the negative word. As a result, the user can perform a keyword search for a product that does not directly contain the allergen of the user as the ingredient but is manufactured in the equipment handling the allergen.

### <Variations>

### · Variation 1

Terminal 2 may display an alarm corresponding to a degree of risk of an allergen on the display.

For example, when the product does not contain the allergen and is not manufactured on the manufacturing line that manufactures another product containing the allergen, terminal 2 may display the frame of the guide image in blue. Meanwhile, when the product does not contain the allergen but is manufactured on the manufacturing line that manufactures another product containing the allergen, terminal 2 may display the frame of the guide image in red.

Further, the alarm may be a sound. For example, when the guide image is tapped, terminal 2 may output a sound corresponding to the risk of the allergen.

### · Variation 2

Server 1 may be configured as to whether or not to perform a keyword search in which a negative word matches neither in the detailed information nor the allergen-related information via terminal 2. This configuration is used in a case where searching for a product that does not contain an allergen and is not manufactured on a manufacturing line of a product containing an allergen.

For example, when server 1 is configured to perform the keyword search in which a negative word does not match the allergen-related information, server 1 performs the keyword search for a product for which the negative word matches neither the detailed information nor the allergen-related information. Meanwhile, when server 1 is configured not to perform the keyword search in which a negative word does not match the allergen-related information, server 1 performs the keyword search for a product for which the negative word does not match the detailed information.

### · Variation 3

In each of the above-described embodiments, a condition for narrowing down products may be designated as a keyword. For example, "calories ≤ × kcal", "lipids ≤ × g", or the like may be designated. In this case, server 1 searches for a product of which the product information matches the condition. That is, in a case of "calories ≤ × kcal", a product in which the calories included in the product information is ≤ × kcal is searched for. In this manner, the user can easily search for a product that matches the condition designated as the keyword.

### · Variation 4

How the functions are split between server 1 and terminal 2 in the series of processes described in each of the above-described embodiments is merely an example. Within a range in which the operation of each embodiment is achieved, which of server 1 or terminal 2 performs each function may be optionally changed. For example, when terminal 2 is a device having sufficient performance, terminal 2 may be configured to specify, itself, the product, to generate guide image data and to display the guide image data on the display. Further, various ways are conceivable as to how functions are split between devices for achieving each function; for example, server 1 specifies the product while terminal 2 generates the guide image data.

### · Variation 5

In each of the above-described embodiments, the assumption is made that the search target is a product. However, the search target is not limited to a product that is a target for commercial distribution and may be an article in general. In a case where article information including the same information as the product information is available, the same processing as in each of the above-described embodiments can be applied to the article in general. For example, application to a free sample or the like is possible and/or application to a food product or the like provided in a buffet style is possible. Further, the search target is not limited to an article provided in a store and may be an article provided in a private event, such as a home party.

### · Variation 6

In Embodiments 2 and 3 described above, a description has been given with an assumption that a negative word and an OK word are registered in advance, but a configuration may be adopted in which at least one of these keywords is input at any time. However, in a case where these keywords are based on the user's constitution such as an allergen, the keywords are less likely to change frequently, and thus it is more convenient for the user to register the keywords in advance.

### · Variation 7

In Embodiments 2 and 3 described above, a description has been given with an allergen as an example of the information used as a negative word. However, the information used as a negative word may be other information. For example, a content amount of nutrients, a component having a specific attribute, such as a genetically modified food, a production place of the product, or the like can be cited as exemplary information used as a negative word. Likewise, an OK word may also be information other than the information exemplified in Embodiments 2 and 3. In Embodiment 3 described above, an example has been described in which an allergen is used as an example for specifying the product manufactured using the common equipment with the product that matches a negative word, but the same processing may be performed on other information as long as the information relates to a component constituting the product.

Although the embodiments have been described above with reference to the drawings, the present disclosure is not limited to these examples. Obviously, a person skilled in the art would arrive at variations and modifications within a scope described in claims. It is understood that these variations and modifications are within the technical scope of the present disclosure. In addition, the components in the embodiments may be optionally combined without departure from the spirit of the present disclosure. Furthermore, the embodiments may be optionally combined.

In the embodiment described above, the term such as "part" or "portion" or the term ending with a suffix such as "-er" "-or" or "-ar" may be replaced with another term, such as "circuit (circuitry)," "assembly," "device," "unit," or "module."

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the

LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

### Industrial Applicability

The disclosure contents of the specification, the drawings, and the abstract of Japanese Patent Application No. 2023-037622 filed on March 10, 2023 are incorporated in the present application by reference.

### Industrial Applicability

The present disclosure is useful for searching for a product displayed on a shelf and acquiring product information using a terminal.

### Reference Signs List

1 Server
1a Controller
1b Storage unit
1c Communicator
2 Terminal
2a Controller
2b Storage unit
2c Communicator
2d Audio processor
2e Display unit
2f Operator
2g Camera
A1a Product shelf
A3a, A3b, A18a, A22a, A22b Guide image

## Claims

1. An information processing apparatus, comprising:
a receiver that receives first image data and a keyword, the first image data being an image resulting from capturing a range including a plurality of articles by a camera;
a controller that specifies an article that matches the keyword from among the plurality of articles included in the first image data; and
an output that outputs second image data for displaying the specified article in a distinguished manner from another article among the plurality of articles included in the image captured by the camera.

2. The information processing apparatus according to claim 1, wherein, the output outputs data for displaying article information of the specified article in a case where an image of the second image data or an article image indicated by the image of the second image data is selected.

3. The information processing apparatus according to claim 1, wherein, the controller extracts an article included in the first image data based on both or one of image data of an article captured in advance and image data of a package of an article captured in advance.

4. The information processing apparatus according to claim 1, wherein, in a case where a plurality of the articles that matches the keyword is specified, the output outputs, as the second image data, data for displaying an entirety of an article image of at least one of the specified plurality of articles and a part of an article image of another article from among the specified plurality of articles.

5. The information processing apparatus according to claim 4, wherein, the controller controls such that the article for which the entirety of the article image is displayed is replaced in response to an operation of a user.

6. The information processing apparatus according to claim 4, wherein, the controller controls such that, when one of article images of the plurality of articles displayed as the second image data is selected, an image presenting article information of the selected article is displayed.

7. The information processing apparatus according to claim 1, wherein,
the receiver receives, as the keyword, a negative word indicating article information of an article avoided by a user, and
the controller specifies an article that matches the negative word from among the plurality of articles included in the first image data.

8. The information processing apparatus according to claim 7, wherein, the output outputs data for displaying in highlight the article that matches the negative word.

9. The information processing apparatus according to claim 8, wherein,
the article information includes information indicating a component of the article; and information indicating a component of another article manufactured using a common facility with the article, and
the output outputs data for performing displaying in different manners respectively in a case where the negative word matches the information indicating the component of the article and in a case where the negative word matches the information indicating the component of said another article manufactured using the common facility with the article.

10. The information processing apparatus according to claim 7, wherein,
the output further receives, as the keyword, an OK word indicating article information of an article desired by a user,
the controller specifies an article that matches the OK word and does not match the negative word, and
the output outputs data for displaying the specified article in highlight.

11. The information processing apparatus according to claim 1, wherein,
the controller specifies an article recommended to a user, based on at least one of a keyword registered in association with the user and/or the keyword received by the receiver, and
the output outputs data for displaying advertising information in which the article recommended to the user is distinguished from another article in a case where the article recommended to the user is included in the plurality of articles included in the image captured by the camera.

12. An article search method, comprising:
receiving first image data and a keyword, the first image data being an image resulting from capturing a range including a plurality of articles by a camera;
specifying an article that matches the keyword from among the plurality of articles included in the first image data; and
outputting second image data for displaying the specified article in a distinguished manner from another article among the plurality of articles included in the image captured by the camera.
